# EUROPÄISCHE PATENTANMELDUNG

(11) **EP 0 958 961 A2**
(43) Veröffentlichungstag der Anmeldung: **24.11.1999**
(21) Anmeldenummer: 99109920.1
(22) Anmeldetag: 20.05.1999
(51) Int. Cl.: B60N 3/00

(54) **Tischplatte für die Armaturentafel eines Kraftfahrzeugs**

(30) Priorität: 23.05.1998 DE 19823141
(71) Anmelder: Delphi Technologies, Inc., Troy, MI 48007 (US)
(72) Erfinder: Kansteiner, Udo, 58456 Witten (DE)
(74) Vertreter: Cohausz & Florack

(57) **Zusammenfassung**

Die Erfindung betrifft eine Tischplatte für die Armaturentafel (1) eines Kraftfahrzeugs. Die erfindungsgemäße Tischplatte (5) kann im Bereich des Beifahrers montiert werden, ohne daß dadurch eine Gefahr einer Verletzung des Beifahrers bei einem Unfall durch die Tischplatte selbst oder auf ihr abgestellte Gegenstände entsteht. Dies wird dadurch erreicht, daß die Tischplatte über ein Schwenkgelenk (6,7), dessen Schwenkachse (X) sich parallel zur Ebene der Tischplatte (5) erstreckt, in Richtung ihrer Oberseite (5d) frei verschwenkbar mit einer Linearführung (8,9) verbunden ist, an der die Tischplatte (5) aus- und einfahrbar geführt ist, und daß mindestens ein Anschlagelement (10a,11a) vorgesehen ist, an dem die Tischplatte (5) im ausgefahrenen Zustand in einer horizontal ausgerichteten Lage abgestützt ist.

## Beschreibung

Die Erfindung betrifft eine Tischplatte für die Armaturentafel eines Kraftfahrzeugs und ihre Verwendung in einer Armaturentafel für Kraftfahrzeuge, in der ein Airbag zum Schutz des Beifahrers bei einem Unfall vorgesehen ist.

In Kraftfahrzeugen, besonders solchen, die für längere Reisen genutzt werden, besteht häufig das Problem, daß auf der im Frontbereich der Fahrgastzelle montierten Armaturentafel keine ausreichende Ablagefläche zur Verfügung steht, auf welcher der Beifahrer leicht erreichbar Utensilien ablegen kann. Insbesondere besteht in der Regel keine Möglichkeit, Gegenstände, wie beispielsweise einen tragbaren Computer oder desgleichen, so nah benachbart zum Beifahrer abzustellen, daß mit oder an diesen während der Fahrt gearbeitet werden kann.

Der Grund für das Fehlen von geeigneten, nahe dem Beifahrer angeordneten Ablageflächen besteht darin, daß man zur Verbesserung des Schutzes des Beifahrers bei einem Unfall jegliche Bauelemente, welche eine Verletzungsgefahr für den Beifahrer darstellen könnten, aus seinem Bereich entfernt hat. Dadurch wird vermieden, daß sich vor dem Beifahrer Einbauten des Kraftfahrzeugs oder während der Fahrt lose abgestellte Gegenstände befinden, an denen sich der Beifahrer bei einem Unfall verletzen könnte.

Eine weitere zum Schutz des Beifahrers aufgestellte Forderung besteht darin, daß stets sichergestellt sein muß, daß sich vor dem Beifahrer keine Gegenstände befinden, welche die Entfaltung des Beifahrer-Airbags bei einem Unfall behindern könnten.

Trotz der mit dem Abstellen von Gegenständen vor dem Fahrer einhergehenden Gefahren besteht besonders bei Nutzern von höherwertigen Kraftfahrzeugen der Wunsch, im Bereich des Beifahrers Arbeitsgeräte, wie tragbare Computer oder Kommunikationsgeräte, abstellen zu können, um auch während der Reisezeit arbeiten zu können.

Die Aufgabe der Erfindung besteht darin, eine Tischplatte zu entwickeln, die im Bereich des Beifahrers montiert werden kann, ohne daß dadurch eine Gefahr einer Verletzung des Beifahrers bei einem Unfall durch die Tischplatte selbst oder auf ihr abgestellte Gegenstände entsteht.

Diese Aufgabe wird dadurch gelöst, daß die Tischplatte über ein Schwenkgelenk, dessen Schwenkachse sich parallel zur Ebene der Tischplatte erstreckt, in Richtung ihrer Oberseite frei verschwenkbar mit einer Linearführung verbunden ist, an der die Tischplatte aus- und einfahrbar geführt ist, und daß mindestens ein Anschlagelement vorgesehen ist, an dem die Tischplatte im ausgefahrenen Zustand in einer horizontal ausgerichteten Lage abgestützt ist.

Gemäß der Erfindung ist die Tischplatte mit einer Linearführung so verbunden, daß es bei in der Armaturentafel montierter Tischplatte problemlos möglich ist, die Platte zum Gebrauch aus der Armaturentafel herauszubewegen. Ebenso einfach kann sie bei Nichtgebrauch wieder in die Armaturentafel eingeschoben werden. Dabei ist die Tischplatte derart gelenkig mit der Führung verbunden, daß sie in ihrer aus der Armaturentafel ausgefahrenen Stellung bei einem Unfall sicher aus der Gefahrenzone des Beifahrers geschwenkt werden kann.

Die erfindungsgemäß vorgesehenen Anschlagelemente gewährleisten zum einen, daß die Tischplatte in der ausgefahrenen Stellung ausreichend fest abgestützt ist, um auch schwerere Gegenstände, wie tragbare Computer, tragen zu können. Zum anderen sind die Anschlagelemente so ausgelegt, daß die Tischplatte trotz ihrer Abstützung bei einem Unfall ungehindert in die gewünschte Richtung, und zwar in Richtung der Tischplattenoberfläche, verschwenkbar ist. Einhergehend mit dem Verschwenken der Tischplatte werden auf ihr abgestellte Gegenstände bei einem Unfall in eine vom Beifahrer abgewandte Richtung geschleudert, so daß auch die Gefahr einer Verletzung des Beifahrers durch derartige Gegenstände minimiert ist.

Eine bevorzugte, robuste und einfach zu montierende Ausgestaltung der Erfindung ist dadurch gekennzeichnet, daß die Linearführung durch mindestens eine Schiene und ein in der Armaturentafel montierbares Führungselement gebildet ist, welches eine Führungsaufnahme aufweist, in der die Schiene verschiebbar gehalten ist. Alternativ oder ergänzend kann die Linearführung auch durch eine im ausgefahrenen Zustand der Tischplatte in die Armaturentafel hineinreichende Verlängerung der Tischplatte gebildet sein, die in mindestens einem in der Armaturentafel montierten Führungselement geführt ist.

Darüber hinaus ist es, je nach Formgebung der Armaturentafel, in der die Tischplatte montiert werden soll, günstig, die Tischplatte in mindestens zwei Teilstücke zu teilen, welche durch ein Gelenk miteinander verbunden sind, dessen Achse sich parallel zur Schwenkachse des Schwenkgelenks erstreckt. Bei einer derartigen Aufteilung der Tischplatte ist auch bei sehr flach ausgebildeten Armaturentafeln sichergestellt, daß die Tischplatte bei einem Unfall sich nicht mehr in dem Raum befindet, der für Bewegungen des Körpers des Beifahrers zur Verfügung stehen muß, welche durch die beim Unfall auftretenden Beschleunigungen erzwungen werden.

Schon die in der erfindungsgemäßen Weise ausgebildete gelenkige Verbindung der Tischplatte mit ihrer Linearführung für sich führt zu einer Verminderung der Verletzungsgefahr für den Beifahrer bei einem Unfall. Es ist jedoch vorteilhaft, Betätigungseinrichtungen vorzusehen, welche die Tischplatte bei einem Unfall aktiv, in Richtung der Frontscheibe des Kraftfahrzeugs, verschwenken.

Eine in diesem Zusammenhang besonders vorteilhafte Verwendung einer erfindungsgemäß ausgebildeten Tischplatte besteht darin, eine solche Tischplatte in einer Armaturentafel für Kraftfahrzeuge zu verwenden, in der ein Airbag zum Schutz des Beifahrers bei einem Unfall vorgesehen ist, wobei gemäß der Erfindung die Tischplatte in der Armaturentafel oberhalb des Airbags in dessen Entfaltungsbereich montiert ist. Durch diese Anordnung von Tischplatte und Airbag wird erreicht, daß der Airbag, wenn er sich bei einem Unfall entfaltet, von der Unterseite der Tischplatte kommend, diese mit einer hohen kinetischen Energie in Richtung der Frontscheibe des Fahrzeugs verschwenkt, ohne daß dazu zusätzliche Betätigungseinrichtungen erforderlich sind.

Weitere vorteilhafte Ausgestaltungen einer erfindungsgemäßen Tischplatte sind in den abhängigen Ansprüchen angegeben und in der nachfolgenden Beispielsbeschreibung im einzelnen erläutert. In dieser wird die Erfindung anhand von einer Ausführungsbeispiele darstellenden Zeichnung näher erläutert. Es zeigen schematisch:
- Fig. 1: den Beifahrerbereich einer Fahrgastzelle eines Kraftfahrzeugs in einem Längsschnitt;
- Fig. 2: den dem Beifahrer zugeordneten Abschnitt der Armaturentafel des Kraftfahrzeugs in einer perspektivischen Ansicht;
- Fig. 3: eine mit einer Linearführung verbundene Tischplatte in perspektivischer Ansicht.
- Fig. 4: eine Gelenkverbindung zwischen der Tischplatte und einer mit ihr verbundenen Linearführung in einem Schnitt,
- Fig. 5: den Bereich, in welchem die Tischplatte mit der Linearführung verbunden ist, in einer aus der durch den in Fig. 3 dargestellten Pfeil A angegebenen Richtung gesehenen Ansicht.

Die Armaturentafel 1 ist unterhalb der Frontscheibe 2 im Frontbereich der weiter nicht dargestellten Fahrgastzelle eines Kraftfahrzeugs angeordnet. Auf der Beifahrerseite des Kraftfahrzeugs ist im an den Fußraum 3 angrenzenden Bereich der Armaturentafel 1 ein Airbag 4 angeordnet, der sich nach Art eines "Low-mount"-Airbags bei einem Unfall vom Fußraum 3 her kommend in Richtung des Oberkörpers des Beifahrers entfaltet.

Oberhalb des Airbags 4 ist in der Armaturentafel 1 eine Tischplatte 5 montiert, die über jeweils ein in ihrem jeweiligen hinteren Eckbereich 5a,5b angeordnetes Gelenk 6,7 gelenkig mit jeweils einer Linearführung 8,9 verbunden ist. Die gemeinsame Schwenkachse X der Gelenke 6,7 ist parallel zu der Ebene angeordnet, in der die Oberfläche 5d der Tischplatte 5 angeordnet ist.

Die Linearführungen 8,9 sind durch Schienen 10,11 gebildet, die in den Führungsaufnahmen 12 von jeweils einem Führungselement 14,15 geführt sind. Die Führungselemente 14,15 sind fest in der Armaturentafel 1 montiert, so daß die Tischplatte 5 in einer linearen Bewegung in die Armaturentafel 1 eingeschoben und aus ihr herausbewegt werden kann.

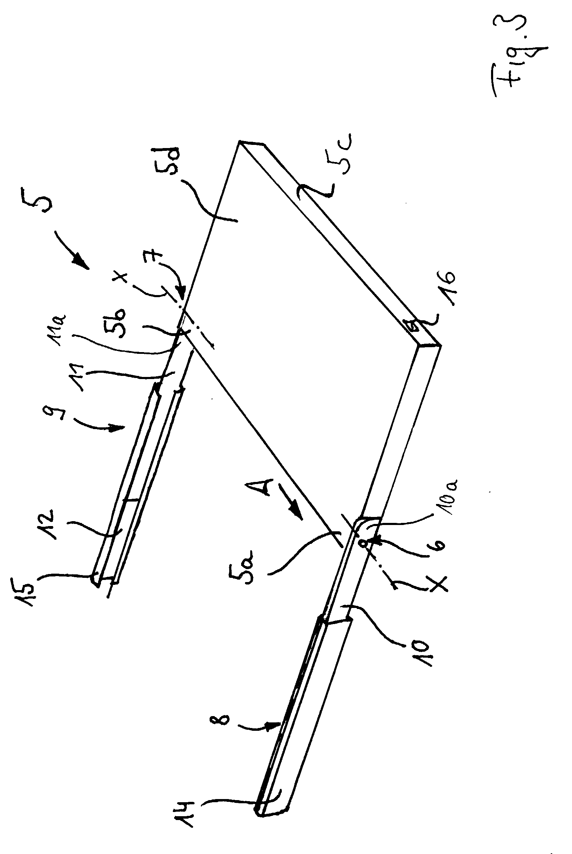

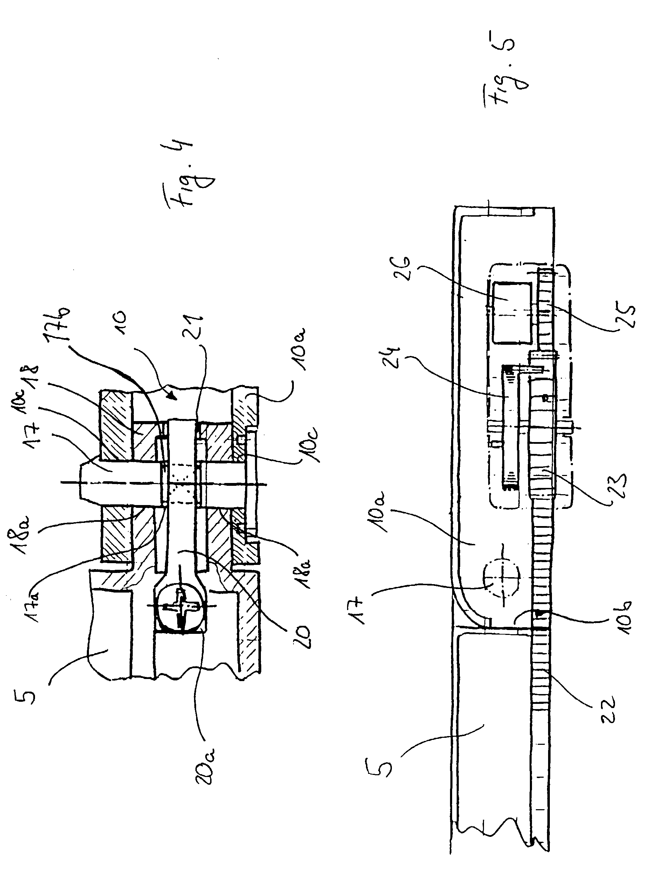

Die vorderen der Tischplatte 5 zugeordneten Enden 10a,11a der Schienen 10,11 der Linearführungen 8,9 bilden Anschlagelemente, an denen die Tischplatte 5 in ihrer horizontal ausgerichteten Stellung abgestützt ist. Gleichzeitig kann die Tischplatte 5 jedoch ungehindert in Richtung ihrer Oberseite und, damit einhergehend in Richtung der Frontscheibe 2, verschwenkt werden. Dazu ist, wie in Fig. 5 dargestellt, die obere vordere Kante 10b der Stirnseite der Schienen 10,11 ausgehend von einem unteren sich rechtwinklig zur Unterseite der Schienen 10,11 erstreckenden und die Tischplatte 5 stützenden Abschnitt 10c abgerundet, so daß keine Kante der Schienen 10,11 in dem durch die Schwenkachse X vorgegebenen in den Figuren durch den Pfeil 9 angedeuteten Verschwenkweg der Tischplatte 5 steht.

In der eingefahrenen Stellung schließt die Vorderseite 5c der Tischplatte 5 bündig mit der dem Beifahrer zugeordneten Front der Armaturentafel 1 ab. In dieser Stellung wird die Tischplatte 5 von einem Rastelement 16 gehalten, welches bei Erreichen der eingeschobenen Endstellung selbsttätig mit einem im einzelnen nicht gezeigten Anschlag der Armaturentafel 1 verrastet. Durch Druckbetätigung kann das Rastelement 16 zum Ausfahren der Tischplatte 5 entriegelt werden.

Die Gelenke 6,7 sind durch jeweils einen Bolzen 17 gebildet, der durch eine Öffnung 18a, die in einem an die Eckbereiche 5a,5b der Tischplatte 5 angeformten Verlängerungssteg 18 ausgebildet ist, und eine dazu fluchtend im vorderen, der Tischplatte 5 zugeordneten Endbereich 10a,11a der jeweiligen Schiene 10,11 eingeformte Öffnung 10d geführt ist. Dabei steht ein Abschnitt 17a des Bolzens 17 frei über den Verlängerungssteg 18. In diesem freien Abschnitt 17a ist an dem jeweiligen Bolzen 17 ein Vielkant 17b ausgebildet, auf den ein als Blattfeder 20 ausgebildetes elastisches Element aufliegt.

Die Blattfeder 20 ist mit ihrem einen Ende 20a fest mit der Tischplatte 5 verschraubt, während ihr anderes Ende in eine Aufnahme 21 des Verlängerungssteges 18 eingeschoben ist. Auf diese Weise ist die Blattfeder 20 vorgespannt und übt eine Federkraft auf den Vielkant 17b des Bolzen 17 aus, durch welche die Tischplatte 5 im unbelasteten Zustand mit einer einfach zu überwindenden Kraft in den durch die einzelnen Flächen des Vielkants 17b vorgegebenen Stellungen gehalten wird.

Um auf Wunsch des Beifahrers ein selbsttätiges Ausfahren der Tischplatte 5 aus der Armaturentafel 1 zu ermöglichen, ist die Tischplatte 5 nach einer ersten Variante über eine an den Schienen 10,11 ausgebildete Zahnstange 22 und ein mit der Zahnstange 22 kämmendes Zahnrad 23 mit einer mit dem Zahnrad 23 verkoppelten Spiralfeder 24 verbunden. Die Spiralfeder 24 ist bei in der Armaturentafel 1 eingeschobener Tischplatte 5 vorgespannt, während sie sich bei ausgefahrener Tischplatte 5 in einem entspannten Zustand befindet. Gleichzeitig kämmt ein zweites Zahnrad 25 mit dem Zahnrad 24, welches mit einem Dämpfungselement 26 verkoppelt ist. Das Dämpfungselement 26 stellt sicher, daß die Tischplatte 5 nach der Entrieglung des Rastelements 16 nicht schlagartig, sondern in einer langsamen, gedämpften Bewegung aus der Armaturentafel 1 ausfährt.

Nach einer alternativen, wegen ihrer einfachen Montierbarkeit und geringen Bauteilezahl vorteilhaften, Ausgestaltung wird die für das selbsttätige Ausfahren der Tischplatte 5 benötigte Kraft von einer hier nicht gezeigten Gasdruckfeder erzeugt, welche über ein an die Zahnstangen 22 angreifendes, ebenfalls nicht gezeigtes Untersetzungsgetriebe mit der Tischplatte 5 verkoppelt ist.

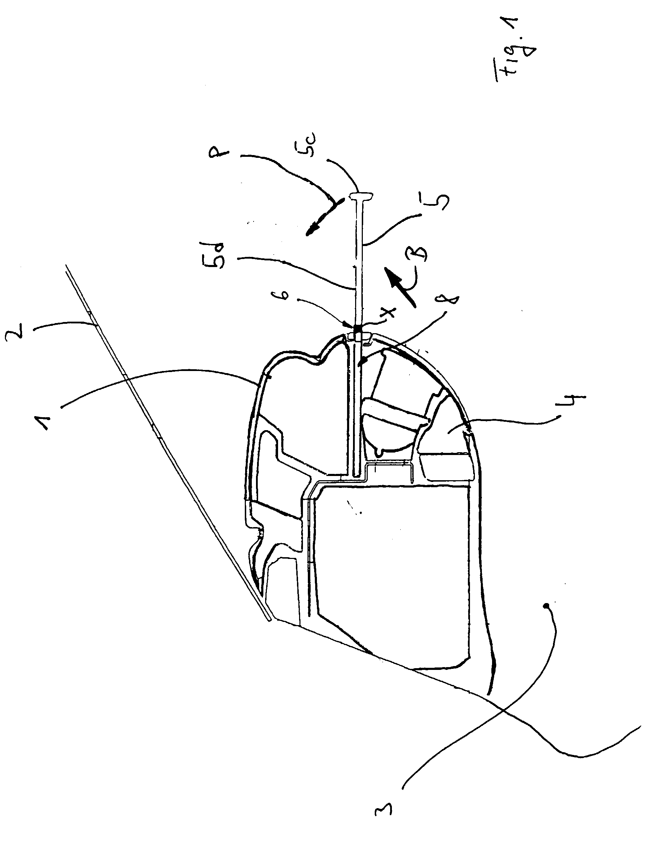

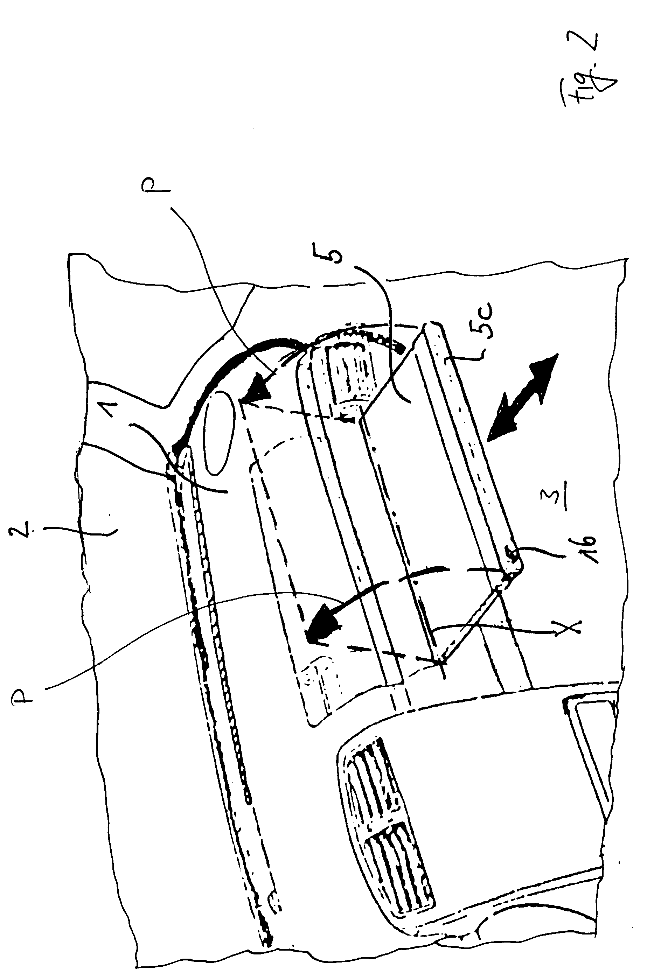

Bei einem Unfall entfaltet sich der Airbag 4 aus dem Fußraum 3 kommend in Richtung B des Beifahrers. Dabei stößt er auf die Unterseite der Tischplatte 5, so daß die Tischplatte 5 um die Schwenkachse X in Richtung P der Frontscheibe 2 geschwenkt wird, bis sie ihre in Fig. 3 in gestrichelten Linien angedeutete Stellung erreicht hat. Einhergehend mit dem unter hoher kinetischer Energie erfolgenden Verschwenken der Tischplatte 5 werden auf dieser stehende Gegenstände in Richtung des freien Raums zwischen Frontscheibe 2 und Armaturentafel 1 bewegt, so daß sie keine Gefahr für den durch den Airbag 4 geschützten Beifahrer darstellen.

### BEZUGSZEICHENLISTE

- 1: Armaturentafel
- 2: Frontscheibe
- 3: Fußraum
- 4: Airbag
- 5: Tischplatte
- 5a,5b: Eckbereiche der Tischplatte 5
- 5c: Vorderseite der Tischplatte 5
- 5d: Oberfläche der Tischplatte 5
- 6,7: Gelenk
- 8,9: Linearführung
- 10,11: Schienen
- 10a,11a: Ende der Schienen 10,11
- 10b: obere vordere Kante 10b der Schienen 10,11
- 10c: die Tischplatte 5 stützender Abschnitt
- 10d: Öffnung der Schienen 10,11
- 12: Führungsaufnahmen
- 14,15: Führungselement
- 16: Rastelement
- 17: Bolzen
- 17a: Abschnitt des Bolzen 17
- 17b: Vielkant
- 18: Verlängerungssteg
- 18a: Öffnung der Verlängerungsstege 18
- 20: Blattfeder
- 20a: Ende der Blattfeder 20
- 21: Aufnahme des Verlängerungssteges 18
- 22: Zahnstange
- 23: Zahnrad
- 24: Spiralfeder
- 25: Zahnrad 25
- 26: Dämpfungselement
- A: Ansichtsrichtung
- B: Richtung, in der sich der Airbag 4 entfaltet
- P: Schwenkrichtung der Tischplatte 5 bei einem Unfall
- X: Schwenkachse der Gelenke 6,7

## Patentansprüche

1. Tischplatte für die Armaturentafel (1) eines Kraftfahrzeugs **dadurch gekennzeichnet**, **daß** die Tischplatte (5) über ein Schwenkgelenk (6,7), dessen Schwenkachse (X) sich parallel zur Ebene der Tischplatte (5) erstreckt, in Richtung ihrer Oberseite (5d) frei verschwenkbar mit einer Linearführung (8,9) verbunden ist, an der die Tischplatte (5) aus- und einfahrbar geführt ist, und daß mindestens ein Anschlagelement (10a,11a) vorgesehen ist, an dem die Tischplatte (5) im ausgefahrenen Zustand in einer horizontal ausgerichteten Lage abgestützt ist.

2. Tischplatte nach Anspruch 1, **dadurch gekennzeichnet**, **daß** die Linearführung (8,9) durch mindestens eine Schiene (10,11) und ein in der Armaturentafel (1) montierbares Führungselement (14,15) gebildet ist, welches eine Führungsaufnahme (12) aufweist, in der die Schiene (10,11) verschiebbar gehalten ist.

3. Tischplatte nach Anspruch 1, **dadurch gekennzeichnet**, **daß** die Linearführung (8,9) durch eine im ausgefahrenen Zustand der Tischplatte (5) in die Armaturentafel (1) hineinreichende Verlängerung der Tischplatte (5) gebildet ist, die in mindestens einem in der Armaturentafel (1) montierbaren Führungselement geführt ist.

4. Tischplatte nach einem der voranstehenden Ansprüche, **dadurch gekennzeichnet**, **daß** das Schwenkgelenk (5,7) nach Art eines Filmscharniers ausgebildet ist.

5. Tischplatte nach einem der Ansprüche 1 bis 3, **dadurch gekennzeichnet**, **daß** das Schwenkgelenk (5,7) durch mindestens einen durch fluchtend angeordnete Ausnehmungen (10b,18a) der Linearführung (8,9) und der Tischplatte (5) geführten Gelenkbolzen (17) gebildet ist.

6. Tischplatte nach Anspruch 5, **dadurch gekennzeichnet**, **daß** an einem freien Abschnitt (17a) des Schwenkbolzens (17) mindestens eine ebene Anschlagfläche (17b) ausgebildet ist und **daß** auf den freien Abschnitt (17a) des Schwenkbolzen (17) eine Federkraft wirkt.

7. Tischplatte nach Anspruch 6, **dadurch gekennzeichnet**, **daß** der Schwenkbolzen (17) in seinem freien Abschnitt (17a) durch eine auf diesem Abschnitt aufliegende und vorgespannte Blattfeder (20) belastet ist.

8. Tischplatte nach einem der voranstehenden Ansprüche, **dadurch gekennzeichnet**, **daß** eine Betätigungseinrichtung vorgesehen ist, welche die Tischplatte (5) bei einem Unfall verschwenkt.

9. Tischplatte nach einem der voranstehenden Ansprüche, **dadurch gekennzeichnet**, **daß** die Tischplatte (5) in mindestens zwei Teilstücke geteilt ist, welche durch ein weiteres Schwenkgelenk miteinander verbunden sind, dessen Achse sich parallel zur Schwenkachse des die Linearführung und die Tischplatte verbindenden ersten Schwenkgelenks erstreckt.

10. Verwendung einer Tischplatte (5) nach einem der voranstehenden Ansprüche in einer Armaturentafel (1) für Kraftfahrzeuge, in der ein Airbag (4) zum Schutz des Beifahrers bei einem Unfall vorgesehen ist, **dadurch gekennzeichnet**, **daß** die Tischplatte (5) in der Armaturentafel (1) oberhalb des Airbags (4) in dessen Entfaltungsbereich montiert ist.

11. Verwendung einer Tischplatte nach Anspruch 10, **dadurch gekennzeichnet**, **daß** das ein entriegelbares Rastelement (16) vorgesehen ist, welches die Tischplatte (5) selbsttätig in ihrer in die Armaturentafel (1) eingefahrenen Stellung verriegelt, und **daß** die Tischplatte (5) mit einem elastischen Element (24) verkoppelt ist, welches sich bei aus der Armaturentafel (1) ausgefahrener Tischplatte (5) in einem entspannten Zustand befindet, während es bei in die Armaturentafel (1) eingefahrener Tischplatte (5) vorgespannt ist.

12. Verwendung einer Tischplatte nach Anspruch 10 oder 11, **dadurch gekennzeichnet**, **daß** die Tischplatte (5) mit einem Dämpfungselement (26) verbunden ist.

13. Verwendung einer Tischplatte nach Anspruch 11 oder 12, **dadurch gekennzeichnet**, **daß** das elastische Element eine Feder (24) ist.

14. Verwendung einer Tischplatte nach Anspruch 11, **dadurch gekennzeichnet**, **daß** das elastische Element eine Gasdruckfeder ist.

15. Verwendung einer Tischplatte nach einem der Ansprüche 11 bis 14, **dadurch gekennzeichnet**, **daß** das elastische Element (24) über ein Übersetzungsgetriebe (22,23) mit der Tischplatte (5) verkoppelt ist.

16. Verwendung einer Tischplatte nach einem der Ansprüche 10 bis 15, **dadurch gekennzeichnet**, **daß** der Airbag (4) ein nahe dem Fußraum (3) des Kraftfahrzeugs montierter "Low-mount"-Airbag ist.

17. Verwendung einer Tischplatte nach einem der Ansprüche 10 bis 16, **dadurch gekennzeichnet**, **daß** der Airbag (4) ein im mittleren Bereich der Armaturentafel (1) montierter "Mid-mount"-Airbag ist.
